Europäisches Patentamt

European Patent Office

Office européen des brevets

(19)

(11) Publication number: 0 297 852
A2

# EUROPEAN PATENT APPLICATION

(12)

(21) Application number: 88305913.1

(22) Date of filing: 29.06.88

(51) Int. Cl.4: **G 01 V 1/38**

(30) Priority: 02.07.87 US 69548

(43) Date of publication of application:
04.01.89 Bulletin 89/01

(84) Designated Contracting States: FR GB NL

(71) Applicant: **MOBIL OIL CORPORATION**
**3225 Gallows Road**
**Fairfax Virginia 22037-0001 (US)**

(72) Inventor: **Enochson, Mark Paul**
**2021 Via Mira Monte**
**Carrollton Texas 75006 (US)**

(74) Representative: **Colgan, Stephen James et al**
**CARPMAELS & RANSFORD 43 Bloomsbury Square**
**London WC1A 2RA. (GB)**

(54) Method for real time display of marine seismic survey data coverage.

(57) A method is provided for collecting and analyzing data related to the quality of coverage for a marine seismic survey so that areas being surveyed where insufficient seismic data has been collected are identified. An exploration zone for which seismic exploration is desired is divided into a grid of corridors of bins. A line of exploration is selected and a seismic source is towed along the line of exploration, generating shot pulses which are reflected by subsurface interfaces in the formation being explored and received by a towed array of seismic receivers. For each reflection received by the seismic receivers, a shot pulse message is sent to a remote data processing unit which precisely locates the position of the CDP reflection within the predetermined grid. Cumulative counts of CDP refections received by bin and by receiver groups are determined and continuously updated to provide a real time display indicative of the quality of coverage of the on-going seismic exploration to allow analysis of the quality of coverage of the seismic survey and to permit adjustment of the exploration such that complete coverage of the exploration area may be achieved.

FIG. 1a

EP 0 297 852 A2

**Description**

## METHOD FOR REAL TIME DISPLAY OF MARINE SEISMIC SURVEY DATA COVERAGE

This invention relates to the real time display of data relating to the quality of a marine seismic survey. More particularly, this invention relates to a method for real time display of data related to the coverage of a marine seismic survey so that gaps in the seismic survey data indicative of insufficient seismic data acquisition for sections of the area of seismic exploration correlated to the gaps in seismic data coverage may be readily identified and additional marine surveying performed for complete coverage of the exploration area.

Marine seismic reflection surveying is a well-known method of geological investigation which is widely employed to locate undersea geological formations which may contain natural gas or petroleum. Marine seismic reflection surveying is typically accomplished by towing a seismic wave source comprising one or more seismic wave generators such as air guns and a multiplicity of hydrophones or other suitable transducers in a trailing linear array over an area to be surveyed. As the source is towed over the survey area, it is periodically activated to produce a seismic wave in the water which travels outward and downward through the sea floor and underlying strata. Portions of the wave energy are reflected back into the water by the sea floor and at each of the underlying strata interfaces. The returning reflected waves pass by the hydrophones or the transducers in the trailing sensor array and cause a disturbance in their outputted reflection signals from which the time of passage of the reflected wave can be determined. The propagation time of a seismic wave to and from a reflection point is directly related to the depth of that point. The sensor outputted reflection signals are subsequently processed to generate a topological representation of the subsurface formations for analysis. The seismic source and trailing sensor array are towed continually along a line through the survey area while gathering the reflection data for the line of exploration. Exploration along several lines allows marine reflection surveys to be made of large areas rather quickly.

Seismic reflection data is typically gathered by common depth point (CDP) shooting. This is accomplished with the marine reflection survey apparatus previously described by periodically firing the seismic source when it and the trailing sensor are approximately equidistant from an intermediate reflection point. A set of traces for each such reflection point is collected, each successive trace being generated while the seismic source is moving away from the particular reflection point. The seismic wave gathering for each successive trace is reflected at an increasingly greater angle from the same reflection point. The set of traces gathered for a particular reflection point by common depth point shooting may be combined or "stacked" by subsequent data processing. In stacking, a normal moveout correction function is applied to the gathered traces to remove the phase differences arising from the slightly differing path lengths of the incident and reflected seismic waves producing each trace. An additional correction is required to remove the effect of surface and near surface irregularities. This correction, called the "static correction", may vary in an irregular manner from point to point both for the receiving array and for each shot. Stacking a series of traces generated by common depth point shooting and corrected for normal moveout and statics produces a composite trace which represents an "ideal" vertical reflection of a seismic wave in which the ratios of the primary reflection return signal strength to noise and to secondary return signal strength are improved over any of the individual traces being stacked.

A significant problem arises when the streamer used to tow the multiplicity of receivers, which in a typical marine seismic reflection survey may include as many as 240 receivers, begins to drift or fan out from the intended line of exploration due to varied physical influences on the receiver streamer such as side currents. As a result of the drift of the streamer, while a marine reflection survey along a straight line of exploration is intended, a marine reflection survey where the line of exploration is curved or feathered and where seismic reflectors are substantially removed from the line of exploration is conducted. Due to streamer drift, the CDPs, which are located midway between the seismic source and the seismic receiver, will also shift away from the desired line of exploration. As a result, the data gathered during the seismic survey, will not be for CDPs located along the line of exploration. When the seismic data gathered is later analyzed, gaps in the seismic data coverage of the exploration zone will appear where insufficient exploration data was gathered due to the drift of the receivers.

Insufficient seismic data collection may also occur if the ship towing the seismic receivers strays from the line of exploration. Again, the result of such straying will be the collection of reflection data for CDPs located away from the intended line of exploration. Other problems which may result in seismic reflection data being gathered for CDPs not located along the intended line of exploration include varying source offset, i.e. drift of the seismic source away from the line of exploration, and skipped or mistimed shot pulses.

It is an object of this invention to provide a method for collecting and analyzing data related to the quality of coverage for a marine seismic survey such that areas being surveyed for which insufficient seismic data has been collected for analysis of the geological characteristics of the area are readily identified.

Accordingly the invention resides in the seismic exploration of an exploration zone wherein a seismic source and an array of seismic receivers are towed along a line of exploration by a survey vessel or other towing means and the reflections of seismic energy from said source are received by said array of seismic receivers and are recorded as seismograms, a method of analyzing the sufficiency of coverage of the seismic exploration of the zone of exploration comprising the steps of:

dividing said exploration zone into a set of bins;

determining a source location for each generated pulse;

determining a receiver location for each received reflection;

determining the location of a common depth point (CDP) for each said received reflection;

accumulating counts of said received reflections according to said set of bins; and

analyzing said bin count to determine whether sufficient seismic exploration coverage of said zone of exploration has been conducted.

The present invention will now be particularly described by reference to the accompanying drawings in which:

Figure 1a is a cross-sectional view of a submerged geophysical formation showing a marine survey apparatus configuration typically used to collect CDP reflection data;

Figure 1b is a block diagram of a data processing system which may be used with the present invention;

Figure 2 is a top view of the marine reflection survey apparatus of Figure 1 which shows the feathering effect of the receiver tow-line;

Figure 3 is typical CDP stacked seismic data received from the apparatus of Figure 1a;

Figures 4a and b are flowcharts of the method of real time indication of the zone of exploration coverage of an ongoing marine seismic CDP reflection survey;

Figures 5a-e shows the variation of orientation with respect to the line of exploration of several magnetic compasses placed along the tow-line;

Figure 6a shows the deviation of the survey ship location with respect to the line of exploration;

Figure 6b shows the deviation of the survey ship heading with respect to the line of exploration;

Figure 6c shows the deviation of the seismic source location with respect to the line of exploration;

Figure 6d shows the extent of deviation of the last receiver along the tow line with respect to the line of exploration; and

Figure 6e shows the variation of the CDP locations of the first, second, third and fourth receiver groups with respect to the line of exploration.

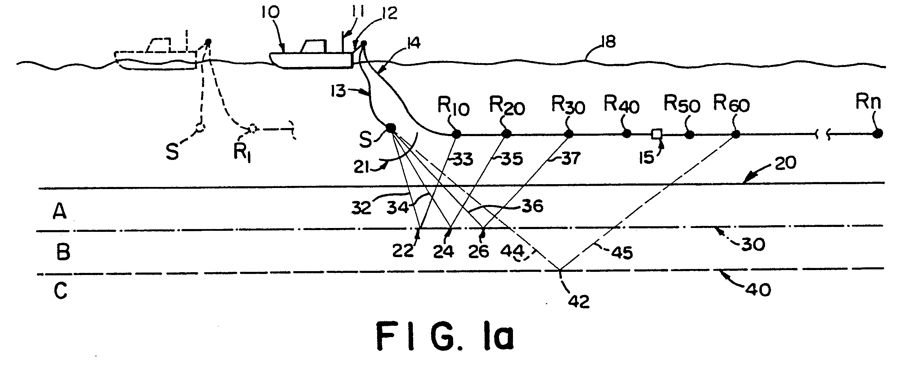

Referring to the drawings, an understanding of the invention is aided by the description of the common depth point survey technique commonly used for collecting seismic reflection data, the apparatus for which is depicted in Figure 1a. A survey ship 10, which includes a radio antenna 11 serving as the navigational reference point and a reel 12 serving as the cable tow point, tows first cable 13 upon which is mounted a seismic source S and second cable 14 upon which is mounted a plurality of seismic receivers $R_i$ (the i denotes the particular receiver in the string) and a plural number of magnetic compasses 15 spaced at regular intervals along the cable 14 between groups of seismic receivers $R_i$. The seismic source S may be a single device or a plurality of devices, such as air guns, which are fired simultaneously or in a carefully timed sequence so as to generate a single seismic wave. Such devices and the means used to control such simultaneous or sequential firings are well known and are the subject of U.S. Patent Nos. 3,687,218 and 3,985,199. As it is used herein, the term "seismic source" refers to the device or devices which are fired in any manner to produce a single primary seismic wave and the terms "seismic receiver" and "receiver" refer to the device which outputs a single trace record for recording or display.

The cable 14 is a commercially available seismic towing cable containing a multiplicity of hydrophones or other pressure transducers and suitable circuitry. For common depth point (CDP) shooting, the sensors $R_i$ are identically configured and spaced equal distances from one another along the cable 14. The seismic receivers $R_i$ detect reflections from the subsurface formation and output a signal containing seismic data for transmission by the circuitry in the cable 14 to the survey ship 10 for recording, retransmission or display. By similar means, the compasses 15 transmit data related to the orientation of a respective compass 15 to the line of exploration via the cable 14 to the survey ship 10.

The cables 12 and 14 are generally towed beneath the surface of the water behind the survey ship 10 in as straight a line as possible over the sea floor 20 and its underlying strata which comprises, for purposes of illustration only, layers A, B and C. Control equipment (not depicted), typically in the survey ship 10, fires the seismic source S to generate a seismic wave having a front 21. The wave front 21 propagates away from the source S through the sea floor surface 20 and the underlying layers A, B, and C. A portion of the wave energy is reflected at each strata interface, for example, at reflection points 22, 24 and 26 on the interface 30 between layers A and B. The wave energy reflected from the interface 30 propagates back up through layer A, the sea floor surface 20 and the water to the sensors $R_i$ where the wave energy is detected. Solid lines 32 and 33 indicate the path of the wave detected primarily by receiver $R_{10}$, solid lines 34 and 35 indicate the path of the wave detected primarily by receiver $R_{20}$ and solid lines 36 and 37 indicate the path of the wave detected primarily by receiver $R_{30}$. It should be realized that the effects of velocity changes from layer to layer which would deflect the theoretical ray between the source and reflection point receivers has been ignored for purposes of simplification. Only a fraction of the seismic wave energy instant upon the interface 30 is reflected. The remainder continues through the interface 30 and underlying layer B to the interface 40 between the strata B and C. Again, a portion of the instant wave energy is reflected. For example, wave energy propagating along a path 44 is reflected at a point 42 on the interface 40 and along a path 45 up through the layers A and B, the sea floor surface 20 and the water and is detected primarily by the receiver $R_{60}$. The location of the survey ship 10, source S and first receiver $R_1$ at the time of a second and subsequent firing of the source S is depicted in phantom.

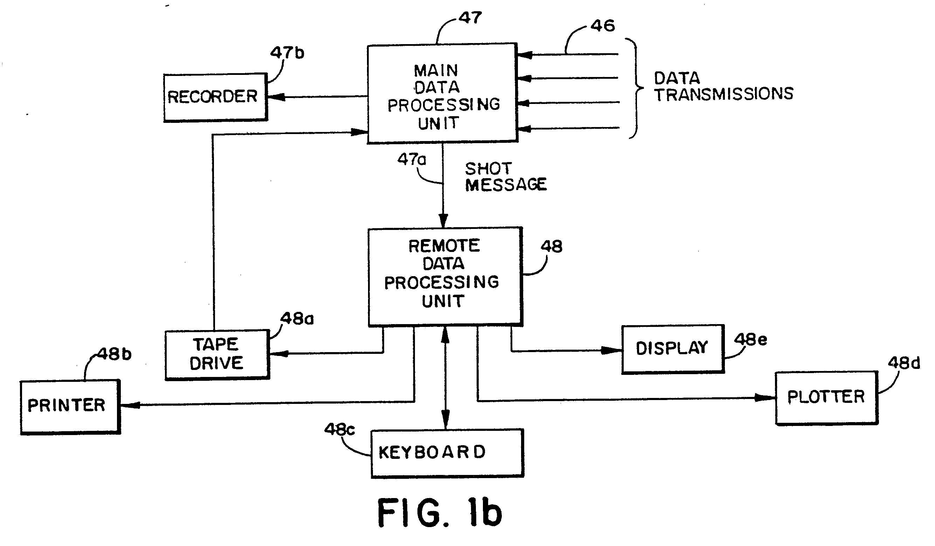

Turning next to Figure 1b, a data processing system which may be used with the present invention is shown in block diagram form. Main data processing unit 47, which is typically located on the survey ship 10, receives plural data transmissions 46 from various sources, primarily from the cable 14 which transmits digital signals related to the seismic data received from the multiple seismic receivers $R_i$ along cable 14, but also including digital signals related to headings from compasses spaced along cable 14, ship location from the survey ship navigational system, ship heading from a gyro or compass typically included as part of the survey ship navigational system, shot pulse information from the seismic source along cable 13, and, for the specific embodiment of the exploration apparatus which includes utilization of a radio location buoy 16, location of the seismic source S from radio location buoy 16. For each shot pulse generated by the seismic source S, the main data processing unit 47 transmits a shot message 47a to a remote data processing unit 48 for further processing.

Preferably, the remote data processing unit is equipped with a tape drive 48a, a printer 48b, a keyboard 48c, a pen plotter 48d and a CRT display 48e.

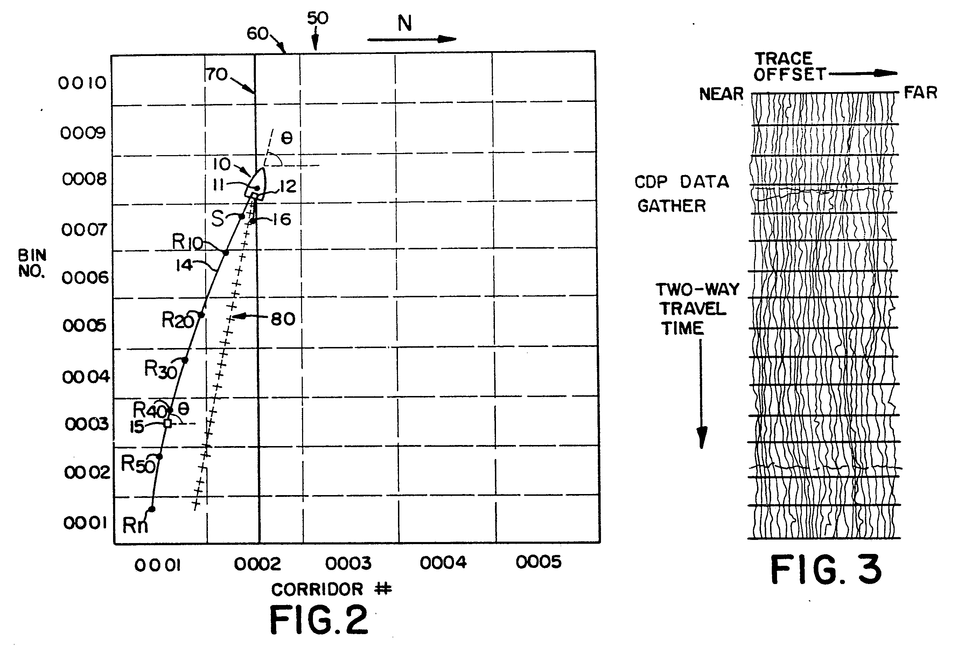

Turning next to Figure 2, a top view of the seismic exploration apparatus of Figure 1a is shown. For a typical seismic exploration apparatus, 240 seismic receivers are placed along the cable 14. These seismic receivers $R_n$ may be grouped into sets of receivers, for example, sets of 60 receivers. The first set of receivers, are commonly referred to as the "near group", the second set as the "mid-near group", the third set as the "mid-far group", and the fourth set as the "far group". Also placed along the tow line cable 14 are a plurality of compasses 15 regularly spaced between a plurality of seismic receivers $R_n$. For the cited example of a group of 240 seismic receivers, 8 compasses would be spaced along cable 14. Figure 2 also shows radio location buoy 16, towed by the survey ship 10, which may be utilized to determine the location of the seismic source and transmit this information to the main data processing unit 47. Ideally, the radio location buoy 16 is located as close as possible to seismic source S. However, for purposes of illustration, Figure 2 exaggerates the separation between radio location buoy 16 and seismic source S to clearly show radio location buoy 16. When radio location buoy 16 is not utilized as part of the data collection apparatus, source location is determined by the fixed offset between seismic source S and navigational reference point 11 and the location of the navigational reference point.

The exploration grid used to initialize the data processing unit may also be seen by reference to Figure 2. The area of exploration 50 is divided into a series of grid corridors 60. For example, typical grid corridor 60 may extend 50 meters across the area of exploration. The area of exploration is further divided into a series of bins for each grid corridor 60. A typical bin may extend 25 meters in length along the line of exploration. In such a manner, the exploration zone is divided into a series of rectangular bins, each bin representing a section of the exploration zone under investigation. During seismic exploration, a corridor 60 is selected for exploration and survey ship 10 proceeds to conduct exploration by towing the seismic source S and receivers $R_n$ through corridor 60 while generating seismic energy at regular intervals and receiving the reflections from the subsurface interfaces. For optimal coverage of the corridor 60 being explored, the ship travels along the line of exploration 70 which is the center line of corridor 60.

If the seismic exploration of corridor 60 was conducted under ideal conditions, ship 10 would proceed precisely along the intended line of exploration 70. Furthermore, the tow cable 14, which tows the multiple receivers $R_n$, would extend in a straight line behind ship 10. Under such idealized conditions, the seismic source and receivers would be precisely located along the line of exploration, and the seismic reflection data, which is collected for a series of CDPs located midway between the source and receiver, would be collected for CDPs precisely located along the line of exploration 70. Thus, optimal seismic data related to subsurface geological formations for the corridor 60 would be collected. However, as the seismic source and receivers begin to stray away from the intended line of exploration, it becomes increasingly likely that the seismic data will be collected for CDPs located outside of the corridor 60, thereby increasing the likelihood of seismic data being collected for areas outside the selected corridor of exploration.

One cause of seismic source and receiver stray from the line of exploration is improper orientation of the ship. While the ship 10 would ideally travel along the straight line of exploration 70, the ship 10 may inadvertently fail to travel along the line of exploration. Line 80 of Figure 2 shows the deviation of a straight tow line from the line of exploration 70 due to ship heading deviation from the line of exploration which extends out of corridor 60.

A second, and more serious, cause of source and receiver stray from the line of exploration and which further increases the likelihood of undesired data collection is the characteristic of the cable 14 to fail to extend in a straight line behind the ship 10. Typically, cable 14 will extend behind the ship 10 in a arc-shaped curve due to physical influences on the cable such as ocean currents. This curving characteristic of the cable tow line is commonly referred to as feathering. A feathered cable tow line will again result in the deviation of the seismic receivers from the intended line of exploration. Again, as seismic data is collected for a series of CDPs located at the midpoint between the seismic source and a seismic receiver, as the receiver location strays from the line of exploration, it becomes increasingly likely that the collected seismic data will be for CDPs located outside of the intended corridor of exploration. Thus, while a seismic exploration of an area by surveying along a series of lines of exploration should, in theory, provide sufficient seismic data for the entire exploration area such that analysis of the exploration area may be completed, it is entirely possible that insufficient seismic data will be collected for sections of the area of exploration and an analysis of the exploration area is incomplete. Figure 3 shows typical seismic data collected for seismic exploration conducted using the apparatus of Figure 1.

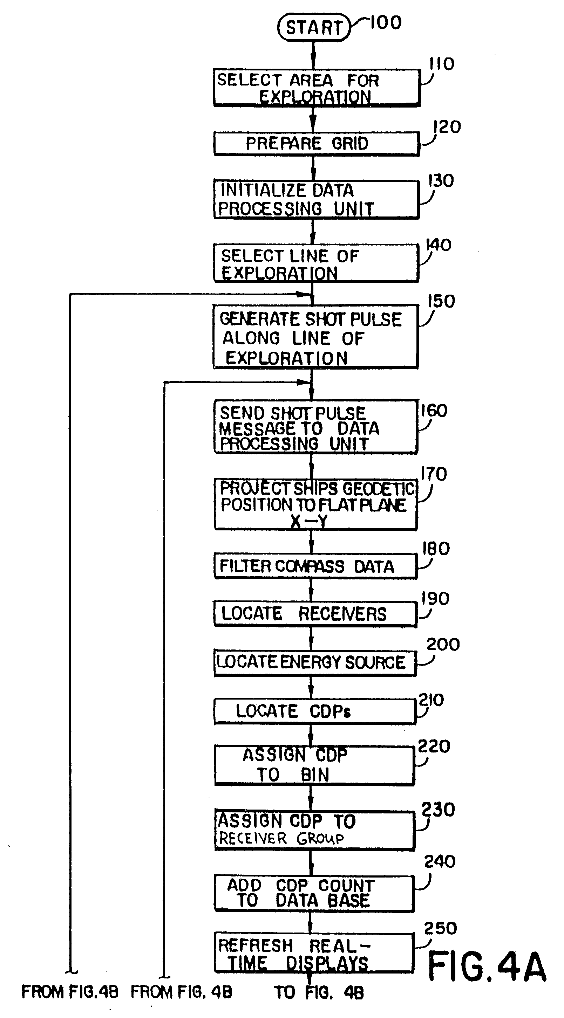

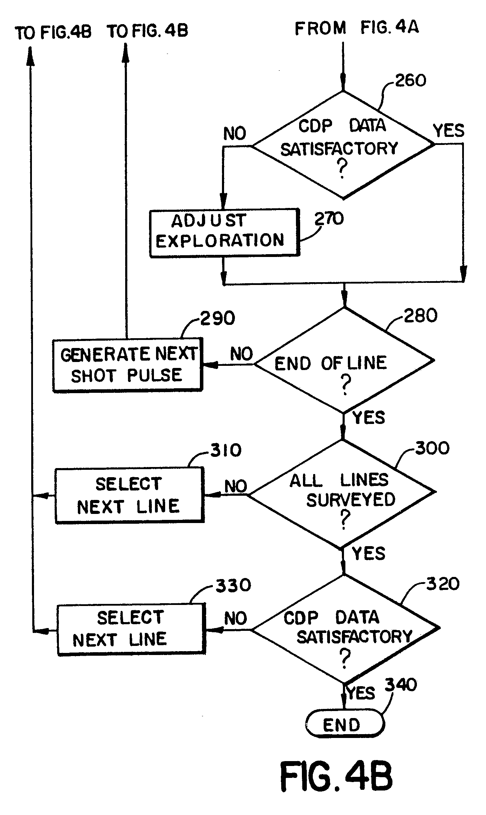

Turning next to Figures 4a and 4b, these illustrate in block diagram form the present method of real time indication of the subsurface coverage of a marine seismic CDP reflection survey. In particular, the present method precisely locates the seismic reflection data according to location in the geological grid and further identifies the reflection data as to receiver. Real time displays of the totals of the number of CDPs received for a zone of exploration and the CDPs for each zone per receiver group then permit real time determination of the quality of the seismic exploration being conducted and whether there is insufficient seismic data being collected for any sections of the exploration area. Such real time display permits the adjustment of the exploration so that additional seismic data may be collected for the identified sections of insufficient data collection.

More specifically, the method shown in Figure 4 begins by the selection of an area for exploration at step 110. Typically, the selected area of exploration will be rectangular in shape. Once selected, the area of exploration is divided into a grid at 120. For example, the area of exploration may be divided into a series of corridors of 50 meters in width, each corridor containing a plural number of bins of 25 meters each. Proceeding to step 130, the remote data processing unit 48, which will receive and analyze data acquired by the seismic data acquisition apparatus to determine a real time indication of quality of seismic survey, is initialized prior to commencement of exploration. During this initialization step, the dimensions of the prospect area; dimensions of the exploration grid; the x-y grid coordinates (i.e. the coordinates which describe the area of exploration and the bins associated with the area of exploration) are input into the remote data processing unit 48. The remote data processing unit 48 also receives information with respect to the location of the cable tow point (The cable tow point being hereby defined as the location of the reel 12 as determined by the fixed offset of reel 12 from the navigational reference point 11 or the location buoy 16.); the number of compasses along the cable tow line 14; the location of each magnetic compass 15 on cable tow line 14, i.e. the distance between each compass 15 and the cable tow point; the number of receivers along the cable tow line 14; the fixed receiver offsets, i.e. the separation of each receiver $R_i$ on the cable tow line 14 from the cable tow point; and the location of the seismic source. Finally, the remote data processing unit 48 should also be initialized with the type of ellipsoid and flat plane projection used in translating the ship location from a geodetic (latitude, longitude) position to a flat plane (x, y) projection on the prospect area grid.

Proceeding with the method shown in Figure 4, a first line of exploration is selected at step 140. Typically, the first line of exploration is the center line of one of the corridors of exploration which comprises the area of exploration. At this point, the survey ship 10 enters the exploration area along the line of exploration and commences at step 150 to generate a series of shot pulses along the line of exploration. As previously described, each shot pulse generates seismic energy which will be reflected by the subsurface formations in the area of exploration and reflected to receivers along the tow line. As seismic data is collected by the receivers $R_i$ along the cable tow line 14 and transmitted via cable 14 to the main data processing unit 47 located on ship 10 for recording, processing and display, the main data processing unit 47 sends a shot pulse message to remote data processing unit 48 at step 160 for analysis of the quality of coverage of the marine seismic survey. A typical shot pulse message capable of transmitting sufficient information to analyze the quality of a marine seismic survey would be a 1,012 data byte word which would include digital data related to the exploration line, shot number, detecting seismic receiver, ship location, ship orientation, compass heading and buoy location.

Analysis of the shot pulse message to determine the quality of the seismic survey data commences at step 170 by the projection of the ship geodetic position from latitude and longitude to a flat plane x-y coordinate system. In projecting ship location from the geodetic position to the x-y grid, either a conic projection such as a Lambert Conformal Conic Projection or a cylindrical projection such as a Transverse Mercator Cylindrical Projection is used. Essentially, such a translation method takes the surface of a first ellipsoid, i.e. a sphere or spheroid such as the earth, transforms the first ellipsoid to a second ellipsoid and then develops the surface on a either a cone or cylinder which intersects the second ellipsoid at two standard parallels. The cone or cylinder is then spread out to form a plane which is the x-y grid.

In performing the geodetic projection as described above, the following parameters are used:

Ellipsoid 1
   Semi-major Axis:     6378206.4000
   Semi-minor Axis:     6356583.8000
   Eccentricity:     .006768658
   Inv. Flattening:     294.9786982

Ellipsoid 2
   Semi-major Axis:     6378135.0000
   Semi-minor Axis:     6356750.5200
   Eccentricity:     .006694318
   Inv. Flattening:     294.2599998

LAMBERT CONFORMAL CONIC PROJECTION
   Latitude of Origin:     28.666667 N
   Stand. Parallel (1):     29.300000 N
   Stand Parallel (2):     30.700000 N

Central Meridian:    -91.333333 E
False X:    609601.220 N
False Y:    .000 N

TRANSVERSE MERCATOR CYLINDRICAL PROJECTION
Central Meridian:    8.5000000 E
Latitude of Origin:    4.000000 N
False Easting:    670559.42
False Northing:    .00
Scale Constant:    .99975000

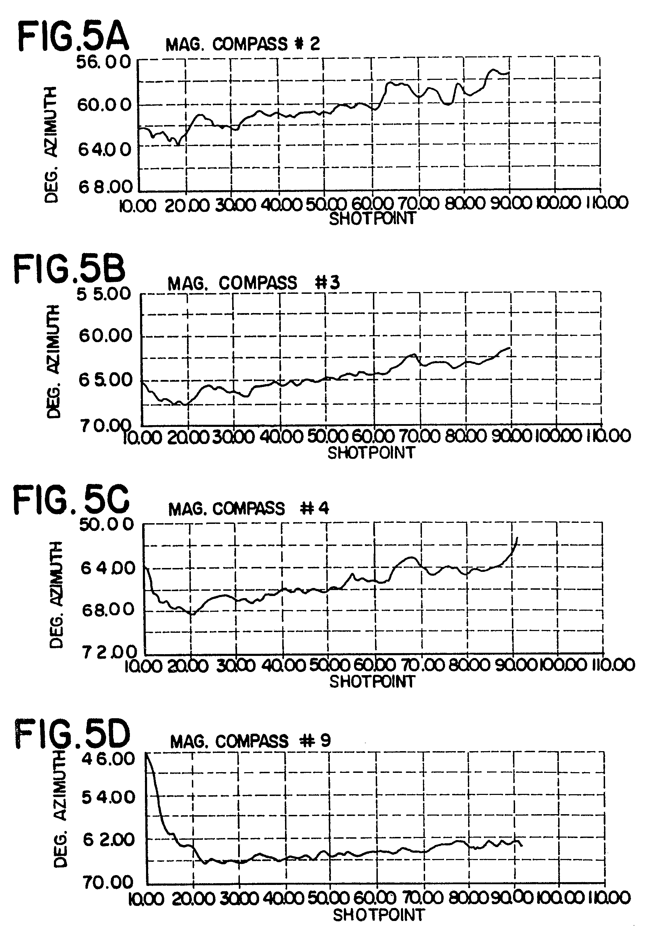

Proceeding to step 180, data from the magnetic compasses 15 located along cable 14 which are received as part of the shot pulse message and which includes digital data related to the deviation of each compass along the cable tow line from the line of exploration are filtered to remove bad or erroneous data. Such bad data is typically indicated by unusually large changes in compass orientation which results in spikes in the received data. Sample data which may be received by the main data processing unit 47 from the magnetic compasses along cable 14 may be seen by reference to Figures 5a-d. Such data, which have already been filtered to remove bad filter data, may be displayed by display 48e of the remote data processing unit 48.

Proceeding to step 190, the filtered compass data is used to locate each receiver in the x-y grid. As described above, the compasses provide the degrees deviation of the cable tow line 14 from the line of exploration at the specific compass location. Utilizing the location of the cable tow point, the separation between the first compass and the cable tow point, the separation between the first compass and the second compass, the degrees of deviation between the first compass and the line of exploration and the degrees of deviation between the second compass and the line of exploration, the location of the first compass in x, y coordinates is then determined. First, the difference of the angle of deviation between the first compass and the line of exploration and the angle of deviation between the second compass and the line of exploration is determined. The angle of deviation for the first compass is then reduced by the change in deviation angle from the second compass to the first compass to determine a hypothetical angle of deviation for the cable tow point. The first compass is located by projecting a circular arc between the cable tow point and the first and second compasses. The length of the arc between the cable tow point and the first compass would be the known separation distance between the cable tow point and the first compass. Similarly, the length of the arc between the first and second compasses would be the known separation distance between the compasses. The angle of deviation from the line of exploration at the cable tow point, the first compass and the second compass would be first, second and third tangent lines to the projected arc, respectively. The curvature of the arc projection would be the difference between the angle of deviation from the line of exploration at the cable tow point and the angle of deviation from the line of exploration at the first compass. From this information, traditional mathematics may be utilized to determine the location of the first compass in the x-y grid. Once the first compass is precisely located utilizing the above-described method, each receiver between the cable tow point and the first compass is located using a straight line projection between two known points, i.e. the cable tow point and the first compass, and the known separation of each receiver from the cable tow point. Once every receiver between the cable tow point and the first compass is located, the same method is used to locate receivers between the first and second compasses. Here, however, the location of the first compass, the angle of deviation from the line of exploration for the first compass, the separation distance between the first and second compasses, the angle of deviation from the line of exploration for the second compass, the separation distance between the second and third compasses and the angle of deviation from the line of exploration for the third compass is used as the initial data for determining receiver locations. The second compass is then located by projecting a second circular arc between the first, second and third compasses, the arc being of length equal to the separation between the compasses and curvature equal to the difference between the angle of deviation from the line of exploration at the first compass and the angle of deviation from the line of exploration at the second compass and having tangent lines at the first, second and third compasses related to the angle of deviation of the respective compass from the line of exploration. The second compass and each receiver between the first and second compasses is then located. This method is utilized until all compasses and receivers along the tow line 14 have been precisely located.

Proceeding to step 200, the seismic source, if a single seismic source is utilized to generate the regular pulses of seismic energy, or the centrix of a string of plural seismic sources for generating the pulse of seismic energy is located. If the fixed seismic source offset embodiment of the invention was previously selected, the seismic source is located a distance equal to the previously determined fixed offset from the navigational reference point 11 along the line of exploration. If the radio location buoy 16 embodiment of the invention was previously selected, the seismic source location is provided by the radio location buoy 16. If the radio location buoy 16 is utilized, the radio location buoy will also provide a compass or gyro reading which indicates the deviation of the location buoy from the line of exploration.

Once the seismic energy source and the receiver of a reflection have been accurately located, the CDP corresponding to the seismic reflection is located at step 210. As previously defined, the CDP is located at the mid-point of the seismic source and receiver of the reflected wave. Once the CDP for the reflected wave of the shot pulse is located, the CDP is assigned at step 220 to an appropriate bin. As previously defined, the bin is one of a plural number of rectangular areas which make up the area of exploration. the coordinates of the locations of the CDP is correlated by the remote data processing unit 48 to the area of exploration grid and is assigned to the bin which correlates to those x and y coordinates. At step 230 the CDP is also assigned a receiver group number. As previously defined, the plurality of receivers which are along the cable 14 are divided into groups or segments of receivers. As previously described, the most common subdivision of the receivers into groups would be the placement of the first 60 receivers as the "near group", the second 60 receivers as the "mid-near group", the third 60 receivers as the "mid-far group" and the fourth 60 receivers as the "far group". As determination of the CDP location requires knowledge of which receiver detects the seismic wave and further the location of the receiver, the assignment of the CDP to the receiver group to which the particular receiver which detected the reflective pulse requires no additional information. At step 240, the total number of CDPs for which seismic data have been recorded within each bin are added together as well as the total number of CDPs within a particular bin by receiver group is summed. The remote data processing unit 48 then displays the updated CDP counts by transmitting such information to display unit 48e, which may be for example an Amdec model 310 monochrome CRT. If desired, a threshold value or threshold values may be selected for the on-going seismic exploration. The threshold value is hereby defined as the number of CDP reflections detected by either all receivers or a selected group of receivers for a specific bin which is the minimum number of CDP reflections for which the seismic data collected for the specific bin shall be considered sufficient or adequate for analysis of that section of the exploration area. Below, a real time display of CDP bin counts for a typical seismic exploration in progress is shown. The display below defines an acceptable number of CDP reflection detections which indicate sufficient surveying of the bin or sector so that proper analysis of the geophysical characteristics of that area as three CDP's per bin zone. An analysis of data contained in the real time display shown below indicates that corridors 33, 35, 49 and 51 suffer from insufficient data collection.

"F" (FAILED TO MEET THRESHOLD)

| 0013 |  |  |  |  |  |  |  |  |  |  |  |  |  |  |  |  |  |  |  |  |  |  |  |  |  |  |  |
|------|---|---|---|---|---|---|---|---|---|---|---|---|---|---|---|---|---|---|---|---|---|---|---|---|---|---|---|
| 0012 |  |  |  |  |  |  |  |  |  |  |  |  |  |  |  |  |  |  |  |  |  |  |  |  |  |  |  |
| 0011 |  |  |  |  |  |  |  |  |  |  |  |  |  |  |  |  |  |  |  |  |  |  |  |  |  |  |  |
| 0010 |  |  |  |  |  |  |  |  |  |  |  |  |  |  |  |  |  |  |  |  |  |  |  |  |  |  |  |
| 0009 |  |  |  |  |  |  |  |  |  |  |  |  |  |  |  |  |  |  |  |  |  |  |  |  |  |  |  |
| 0008 |  |  |  |  |  |  |  |  |  |  |  |  |  |  |  |  |  |  |  |  |  |  |  |  |  |  |  |
| 0007 |  |  |  |  |  |  |  |  |  |  |  |  |  |  |  |  |  |  |  |  |  |  |  |  |  |  |  |
| 0006 |  |  |  |  |  |  |  |  |  |  |  |  |  |  |  |  |  |  |  |  |  |  |  |  |  |  |  |
| 0005 |  |  |  |  |  |  |  |  |  |  |  |  |  |  |  |  |  |  |  |  |  |  |  |  |  |  |  |
| 0004 |  |  |  |  |  |  |  |  |  |  |  |  |  |  |  |  |  |  |  |  |  |  |  |  |  |  |  |
| 0003 |  |  |  |  |  |  |  |  |  |  |  |  |  |  |  |  |  |  |  |  |  |  |  |  |  |  |  |
| 0002 |  |  |  |  |  |  |  |  |  |  |  |  |  |  |  |  |  |  |  |  |  |  |  |  |  |  |  |
| 0001 |  |  |  |  |  |  |  |  |  |  |  |  |  |  |  |  |  |  |  |  |  |  |  |  |  |  |  |

The next chart shown below is the same set of data, CDP counts per bin, subdivided by receiver group. Here, the operator has predetermined that for segment one, 2 CDPs are required to meet the predetermined threshold value for minimal data collected to product satisfactory analysis of the area of exploration. For segment two, the threshold is 4 CDPs; for segment three, 5 CDPs; and for segment four, 4 CDPs. Here, the example shows that insufficient seismic data has been collected in corridors 33, 35, 44, 46, 49 and 51. However, this display also shows that in corridor 33 only segment 3 receivers have deficient number of CDPs; corridor 35, segments 3 and 4; corridor 36, segment 1; corridor 44, segment 1; corridor 46, segment 4; corridor 49, segment 3; and corridor 51 segments 2, 3, and 4.

'T' (FAILED TO MEET THRESHOLD)

| | | | | | | | | | | | | | | | | | | | | | | | | | | |
|---|---|---|---|---|---|---|---|---|---|---|---|---|---|---|---|---|---|---|---|---|---|---|---|---|---|---|
| 0030 | 15 | 17 | 33 | 5 | 31 | 0 | 29 | 43 | 18 | 18 | 18 | 13 | 14 | 19 | 26 | 19 | 18 | 18 | 51 | 38 | 36 | 0 | 18 | 18 | 36 | 18 |
| 0029 | 15 | 17 | 32 | 6 | 30 | 0 | 28 | 44 | 18 | 18 | 18 | 12 | 14 | 19 | 25 | 18 | 18 | 18 | 50 | 40 | 37 | 0 | 18 | 18 | 37 | 18 |
| 0028 | 15 | 16 | 33 | 5 | 31 | 0 | 28 | 43 | 18 | 18 | 18 | 13 | 13 | 20 | 26 | 18 | 18 | 19 | 52 | 38 | 36 | 0 | 18 | 18 | 36 | 18 |
| 0027 | 14 | 17 | 32 | 6 | 30 | 0 | 27 | 45 | 16 | 18 | 18 | 12 | 13 | 21 | 25 | 18 | 18 | 17 | 51 | 38 | 36 | 0 | 18 | 18 | 36 | 18 |
| 0026 | 14 | 15 | 34 | 5 | 31 | 0 | 27 | 43 | 18 | 18 | 18 | 12 | 15 | 19 | 26 | 19 | 17 | 18 | 51 | 38 | 36 | 0 | 18 | 18 | 36 | 18 |
| 0025 | 15 | 13 | 35 | 6 | 30 | 0 | 28 | 44 | 16 | 18 | 18 | 13 | 15 | 20 | 25 | 19 | 17 | 17 | 50 | 38 | 36 | 0 | 18 | 18 | 37 | 18 |
| 0024 | 16 | 13 | 36 | 5 | 31 | 0 | 28 | 44 | 18 | 18 | 18 | 13 | 15 | 18 | 26 | 18 | 18 | 18 | 52 | 28 | 36 | 0 | 18 | 18 | 36 | 18 |
| 0023 | 17 | 13 | 35 | 5 | 31 | 0 | 29 | 43 | 18 | 18 | 18 | 13 | 14 | 20 | 25 | 19 | 17 | 19 | 51 | 38 | 36 | 0 | 18 | 18 | 36 | 19 |
| 0022 | 17 | 13 | 35 | 5 | 31 | 0 | 29 | 43 | 18 | 18 | 18 | 14 | 13 | 19 | 26 | 19 | 17 | 18 | 52 | 28 | 36 | 0 | 18 | 18 | 36 | 18 |
| 0021 | 19 | 13 | 34 | 5 | 31 | 0 | 28 | 43 | 18 | 18 | 18 | 14 | 13 | 18 | 26 | 19 | 17 | 17 | 52 | 38 | 36 | 0 | 18 | 18 | 36 | 20 |
| 0020 | 19 | 13 | 34 | 5 | 31 | 0 | 28 | 44 | 19 | 18 | 18 | 14 | 13 | 18 | 27 | 18 | 17 | 18 | 52 | 28 | 36 | 0 | 18 | 18 | 36 | 18 |
| 0019 | 19 | 13 | 33 | 38 | 33 | 0 | 27 | 42 | 18 | 18 | 18 | 13 | 13 | 20 | 25 | 19 | 17 | 18 | 52 | 38 | 34 | 0 | 18 | 18 | 34 | 20 |
| 0018 | 19 | 13 | 33 | 29 | 34 | 0 | 29 | 44 | 18 | 18 | 18 | 14 | 13 | 19 | 26 | 19 | 16 | 18 | 53 | 28 | 36 | 0 | 18 | 18 | 36 | 18 |
| 0017 | 20 | 13 | 32 | 28 | 34 | 0 | 28 | 43 | 18 | 18 | 18 | 13 | 13 | 19 | 26 | 22 | 14 | 18 | 49 | 38 | 33 | 0 | 19 | 18 | 37 | 19 |
| 0016 | 20 | 13 | 32 | 28 | 34 | 0 | 28 | 45 | 18 | 18 | 18 | 13 | 15 | 18 | 26 | 21 | 15 | 18 | 53 | 28 | 36 | 0 | 18 | 18 | 36 | 18 |
| 0015 | 21 | 13 | 31 | 18 | 35 | 0 | 29 | 43 | 18 | 18 | 18 | 13 | 15 | 18 | 25 | 21 | 15 | 18 | 50 | 38 | 34 | 0 | 19 | 18 | 34 | 18 |
| 0014 | 21 | 12 | 32 | 18 | 35 | 0 | 30 | 42 | 18 | 18 | 18 | 13 | 15 | 18 | 26 | 21 | 15 | 18 | 54 | 18 | 36 | 0 | 18 | 18 | 36 | 18 |
| 0013 | 23 | 12 | 31 | 18 | 35 | 0 | 30 | 42 | 18 | 18 | 18 | 12 | 15 | 19 | 27 | 21 | 15 | 18 | 53 | 28 | 36 | 0 | 19 | 18 | 36 | 18 |
| 0012 | 21 | 14 | 31 | 18 | 35 | 0 | 31 | 41 | 18 | 18 | 18 | 12 | 16 | 18 | 26 | 20 | 16 | 18 | 52 | 28 | 34 | 0 | 18 | 18 | 36 | 18 |
| 0011 | 21 | 15 | 30 | 18 | 35 | 0 | 30 | 41 | 17 | 18 | 18 | 12 | 16 | 18 | 26 | 22 | 15 | 18 | 53 | 28 | 36 | 0 | 18 | 18 | 36 | 18 |
| 0010 | 22 | 15 | 30 | 18 | 35 | 0 | 31 | 43 | 18 | 18 | 18 | 13 | 16 | 17 | 26 | 21 | 15 | 18 | 52 | 28 | 36 | 0 | 18 | 18 | 36 | 18 |
| 0009 | 22 | 14 | 30 | 18 | 35 | 0 | 31 | 40 | 18 | 18 | 18 | 12 | 16 | 17 | 27 | 22 | 15 | 19 | 52 | 38 | 36 | 0 | 18 | 18 | 37 | 20 |
| 0008 | 23 | 14 | 30 | 18 | 35 | 0 | 29 | 42 | 18 | 18 | 18 | 12 | 16 | 18 | 26 | 24 | 12 | 18 | 53 | 38 | 36 | 0 | 18 | 18 | 36 | 18 |
| 0007 | 23 | 12 | 31 | 18 | 35 | 0 | 31 | 40 | 18 | 18 | 18 | 12 | 16 | 17 | 26 | 23 | 12 | 19 | 50 | 38 | 37 | 0 | 18 | 18 | 34 | 19 |
| 0006 | 24 | 11 | 33 | 18 | 35 | 0 | 29 | 41 | 18 | 18 | 18 | 12 | 17 | 16 | 27 | 26 | 18 | 18 | 53 | 28 | 36 | 0 | 18 | 18 | 36 | 18 |
| 0005 | 24 | 12 | 33 | 18 | 35 | 0 | 31 | 39 | 18 | 18 | 18 | 12 | 16 | 16 | 29 | 26 | 11 | 19 | 52 | 18 | 36 | 0 | 17 | 18 | 33 | 19 |
| 0004 | 23 | 13 | 33 | 18 | 35 | 0 | 28 | 42 | 18 | 18 | 18 | 13 | 16 | 16 | 27 | 26 | 18 | 18 | 53 | 28 | 36 | 0 | 18 | 18 | 36 | 18 |
| 0003 | 23 | 14 | 32 | 18 | 35 | 0 | 30 | 42 | 19 | 18 | 18 | 12 | 16 | 16 | 28 | 27 | 18 | 19 | 51 | 18 | 38 | 0 | 17 | 18 | 36 | 19 |
| 0002 | 24 | 14 | 32 | 18 | 35 | 0 | 30 | 42 | 18 | 18 | 18 | 12 | 16 | 17 | 27 | 26 | 18 | 18 | 54 | 0 | 36 | 0 | 18 | 18 | 36 | 18 |
| 0001 | 24 | 15 | 30 | 28 | 35 | 0 | 32 | 42 | 19 | 18 | 18 | 13 | 14 | 18 | 28 | 27 | 18 | 18 | 53 | 18 | 37 | 0 | 17 | 18 | 36 | 19 |
| | 0030 | 0031 | 0032 | 0033 | 0034 | 0035 | 0036 | 0037 | 0038 | 0039 | 0040 | 0041 | 0042 | 0043 | 0044 | 0045 | 0046 | 0047 | 0048 | 0049 | 0050 | 0051 | 0052 | 0053 | 0054 | 0055 |

While not absolutely necessary, for optimal analysis of the geological characteristics of the subsurface formation under investigation, some minimal number of CDPs should be required for each of the receiver groups. This practice is recommended because the various groups of receivers will typically receive reflections from different interfaces within the subsurface formation. Thus, the requirement for CDPs from all receivers groups should provide more complete information regarding the subsurface formation.

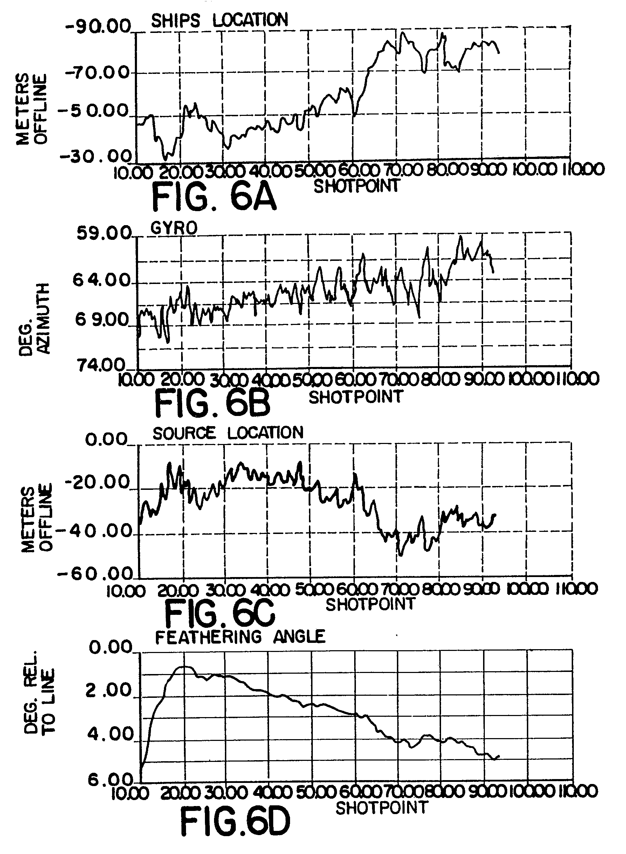

Figures 6a-e show various other possible real time displays which may be compiled by the remote data processing unit 48 using the data provided to and manipulated by the remote data processing unit 48 according to the previously detailed steps and displayed using computer graphic packages and methods well known to those skilled in the art. For example, the display shown in Figure 6a displays the survey ship's deviation from the line of exploration. As previously discussed, the precise ship location at each shot point is determined. Since the coordinates of the line of exploration are known, the deviation of the ship from the line of exploration for each shot point may be easily compiled and displayed. In Figure 6b, the deviation of the ship heading from the line of exploration is displayed. For each shot point, a gyro or compass included as part of the ship navigational system determines the deviation of the ship heading from the line of exploration and such information is supplied to the remote data processing system 48 which, if desired, may compile such information and display it at display 48e. The displays of Figures 6a and 6b are particularly useful in a real time determination of the extent of survey ship deviation from the line of exploration and the extent of correction necessary to maintain seismic exploration along the line of exploration.

Figure 6c shows an exemplary display of a plot of source location, i.e. the deviation of point of generation of the seismic source from the navigational reference point. For each shot pulse, the source location is determined by either the location of cable tow point and the previously determined fixed source offset or by radio location buoy 16. Moreover, that the location of the seismic source S is provided to the remote data processing unit 48 as part of the shot message for each pulse. Thus, the remote data processing unit 48 may compile the date which comprises the plot shown in Figure 6c without any requirement of additional data and may transmit such data compilation to the display 48e using methods well known in the art.

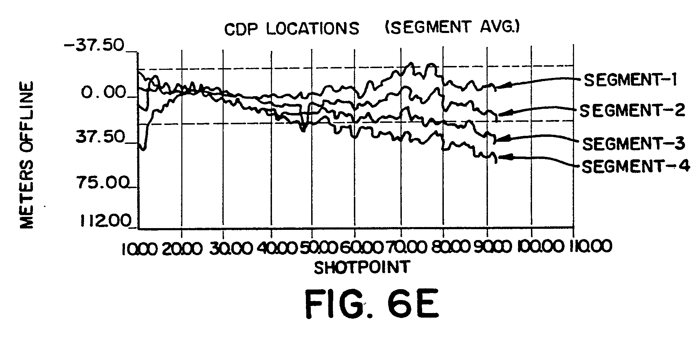

In Figure 6e, the extent of feathering of the cable tow line 14 with respect to the line of exploration is displayed with respect to the shot point number. Here, the feathering angle is determined as the deviation of the last compass along the cable tow line 14 from the line of exploration. Such information is provided to the remote data processing unit 48 as part of the shot message. Thus, the remote data processing unit 48 may again compile the data which comprises the plot shown in Figure 6d without any requirement of additional data and may transmit such compiled data to the display 48e using methods well known in the art.

Figure 6e is a real time display of the deviation from the line of exploration of the CDP locations for each of the receiver groups included on the cable tow line 14. The remote data processing unit 48, which previously determined the location of each CDP reflection received for a shot by bin and receiver group calculates the deviation of each CDP location from the known line of exploration and plots the deviation from the line of exploration with respect to the associated shot number. Using data derived by the remote data processing unit 48, the real time display of Figure 6e may be compiled and transmitted to display 48e using the aforementioned skills well known in the art.

The real time displays shown in Figures 6c and 6d are particularly helpful in identifying the extent of source and receiver deviation from the line of exploration and the extent of correction necessary to maintain seismic exploration along the line of exploration. The display shown in Figure 6e is particularly helpful in identifying the extent of deviation of the collected CDPs from the line of exploration caused by the various (and combined) sources of error described herein so that excessive deviation of the CDPs for either all receivers or a particular group or segment of receivers from the line of exploration may be identified and corrected.

It it also possible to calculate and display the percentage of CDP reflection points collected for the corridor of exploration being explored by the ship 10 compared to the percentage of CDP's being generated by that particular line of exploration which are being recorded for points either to the left or the right of the corridor undergoing exploration. Such a display is particularly useful to embodiments of the invention where adjustment of the orientation of ship or tow line are sought while the survey ship is still traversing line of exploration and the seismic exploration is still ongoing.

Returning now to Figure 4b and step 260, the real time display of CDP data as described above, may be analyzed to determine whether satisfactory data acquisition is being conducted. This determination may be made while the exploration is ongoing at which time it is determined whether the CDP counts are being incremented in the desired bins and/or segments where the intended line of exploration is located and therefore whether the seismic data is being collected for the intended exploration areas. If the CDP data is not satisfactory, i.e. the display indicates that the recently acquired CDPs are for either bins or corridors outside the intended bins or corridors, the exploration may be adjusted at 270. For example, the direction of the towing ship 10 may be adjusted to bring the tow line closer to the intended line of exploration.

Proceeding to step 280, if the generated shot pulse is at the end of the selected line of exploration for the corridor, the exploration proceeds to step 300. If the shot pulse is not the last shot pulse for the selected corridor of exploration, the next shot pulse is generated at step 290 and the algorithm returns to step 140 for the generation of the next shot pulse, followed by the transmission of data from such next shot pulse to the remote data processing unit 48 for further processing. Returning to step 300, if the line of exploration has been completed, a determination is made whether all lines of the exploration area have been examined. If it is determined at step 300 that there exists more lines of exploration which have not been explored, a next line is selected at step 310 and the algorithm returns to step 150 for the generation of regular shot pulses along the next line. If all lines have been surveyed at 300, the algorithm proceeds to step 320 where the refreshed real time display is again reviewed and should the display indicate that there is unsatisfactory data acquisition along a particular line or lines, additional lines of exploration are selected at step 330 for further exploration and the algorithm returns to step 150 for further exploration along the supplemental lines of exploration. If the examination of the CDP data is satisfactory at step 320, i.e. all data indicates that sufficient data for proper analysis of the geophysical characteristics of the area of exploration is adequate, the algorithm ends at step 340.

In yet another embodiment of the invention, the location of the source and the receivers is precisely determined by the remote data processing unit 48 and stored by the tape drive 48a. The stored precise source and receiver locations may be transmitted from tape drive 48a to the main data processing unit 47 where the data location for each shot pulse may be calculated as the distance between the precise source and receiver locations for the shot pulse and corresponding reflection of seismic data. The determined data locations may then be correlated to the actual seismic data transmitted to the main data processing unit 47 by the seismic data receivers $R_i$. Returning to Figure 3, an example of a CDP data gathered collected during the previously described seismic exploration is shown. In such seismic data collections, data locations, i.e. the precise location of the receiver which detects the reflected seismic data and the location of the seismic source is often prone to inaccuracies caused by the misorientation and/or feathering of the cable 14. Thus, a data location of higher accuracy may be calculated for each shot pulse during the collection of cumulative CDP location count data for real time indication of quality of the ongoing seismic exploration and the determined data locations applied to the actual seismic data collected during seismic exploration such that the CDP data gathered for the seismic exploration conducted will have more accurate values for data location.

## Claims

1. In seismic exploration of an exploration zone wherein a seismic source and an array of seismic receivers are towed along a line of exploration by a survey vessel or other towing means and the reflections of seismic energy from said source are received by said array of seismic receivers and are recorded as seismograms, a method of analyzing the sufficiency of coverage of the seismic exploration of the zone of exploration comprising the steps of:
dividing said exploration zone into a set of bins;
determining a source location for each generated pulse;
determining a receiver location for each received reflection;
determining the location of a common depth point (CDP) for each said received reflection;
accumulating counts of said received reflections according to said set of bins; and
analyzing said bin count to determine whether sufficient seismic exploration coverage of said zone of exploration has been conducted.

2. The method of Claim 1 wherein determination of sufficient seismic exploration of said zone of exploration is accomplished by comparing said bin count to a corresponding threshold value for said bin.

3. The method of Claim 1 or Claim 2 wherein the step of determining the source location further comprises the step of determining the distance between a navigational reference point and said seismic source.

4. The method of Claim 1 or Claim 2 wherein the step of determining the source location further comprises the step of determining the distance between a compass tow point and a radio location buoy.

5. The method of any preceding claim wherein the step of determining the location of each of said receivers further comprises the steps of:
determining the separation of each of said receivers from a cable tow point;
determining the precise location of each of a plurality of compasses carried by said receiver array;
determining the separation of each of said compasses from said cable tow point; and
determining the deviation of each of said compasses from said line of exploration;

6. The method of any preceding claim further comprising the steps of calculating and displaying for each shot pulse the deviation from said line of exploration of said vessel.

7. The method of any preceding claim further comprising the steps of calculating and displaying the deviation of the heading of said vessel from said line of exploration for each shot pulse.

8. The method of any preceding claim further comprising the steps of calculating and displaying the deviation of said seismic source from a navigational reference point for each shot pulse generated.

9. The method of any preceding claim further comprising the steps of calculating and displaying the deviation of said seismic array of receivers from the line of exploration for each shot pulse generated.

10. The method of any preceding claim further comprising the steps of calculating and displaying the deviation of said CDP locations from said line of exploration.

FIG. 1a

0297852

FIG. 1b

FIG.2

FIG. 3

0297852

0297852

START ~ 100

SELECT AREA FOR EXPLORATION — 110

PREPARE GRID — 120

INITIALIZE DATA PROCESSING UNIT — 130

SELECT LINE OF EXPLORATION — 140

GENERATE SHOT PULSE ALONG LINE OF EXPLORATION — 150

SEND SHOT PULSE MESSAGE TO DATA PROCESSING UNIT — 160

PROJECT SHIPS GEODETIC POSITION TO FLAT PLANE X—Y — 170

FILTER COMPASS DATA — 180

LOCATE RECEIVERS — 190

LOCATE ENERGY SOURCE — 200

LOCATE CDPs — 210

ASSIGN CDP TO BIN — 220

ASSIGN CDP TO RECEIVER GROUP — 230

ADD CDP COUNT TO DATA BASE — 240

REFRESH REAL-TIME DISPLAYS — 250

FIG.4A

FROM FIG.4B    FROM FIG. 4B    TO FIG. 4B

0297852

FIG.4B

0297852

## FIG.5A

MAG. COMPASS # 2

## FIG.5B

MAG. COMPASS #3

## FIG.5C

MAG. COMPASS #4

## FIG.5D

MAG. COMPASS #9

0297852

SHIPS LOCATION

FIG. 6A

GYRO

FIG. 6B

SOURCE LOCATION

FIG. 6C

FEATHERING ANGLE

FIG. 6D

CDP LOCATIONS   (SEGMENT AVG.)

FIG. 6E